# EUROPEAN PATENT SPECIFICATION

(11) **EP 2 259 364 B1**
(45) Date of publication and mention of the grant of the patent: **03.04.2013**
(21) Application number: 10162693.5
(22) Date of filing: 12.05.2010
(51) Int. Cl.: H01M 2/04, H01M 2/34, H01M 10/42

(54) **Rechargeable battery**
Wiederaufladbare Batterie
Batterie rechargeable

(30) Priority: 14.05.2009 US 178357 P; 05.02.2010 US 701401
(43) Date of publication of application: 08.12.2010
(73) Proprietor: Samsung SDI Co., Ltd., Gyeonggi-do (KR); Robert Bosch GmbH, 70442 Stuttgart (DE)
(72) Inventor: Byun, Sang-Won, Yongin-si, Gyeonggi-do (KR); Hashimoto, Tatsuya, Yongin-si, Gyeonggi-do (KR); Cheon, Sang-Eun, Yongin-si, Gyeonggi-do (KR); Kim, Yong-Sam, Yongin-si, Gyeonggi-do (KR); Kim, Hyo-Seob, Yongin-si, Gyeonggi-do (KR); Kim, Sung-Bae, Yongin-si, Gyeonggi-do (KR); Choi, Soo-Seok, Yongin-si, Gyeonggi-do (KR)
(74) Representative: Rasch, Dorit

(56) References cited:
- EP-A2- 1 076 350
- WO-A1-2007/093626
- DE-A1- 2 719 301
- JP-A- 2004 319 463
- JP-A- 2006 228 520
- US-A- 6 143 440

## Description

### Field

The present invention relates to a rechargeable battery, more particularly to a rechargeable battery which may secure safety in overcharging.

### Description of the Related Art

Prismatic rechargeable batteries for hybrid electric vehicle (HEV) have a heat dissipation efficiency superior to cylindrical rechargeable batteries, and have advantage over the cylindrical rechargeable batteries in securing safety when overcharged.

Therefore, current interrupt devices (CIDs) which interrupt currents when overcharged are not applied to the prismatic rechargeable batteries for HEV.

However, plug in hybrid electric vehicles (PHEVs) and electric vehicles as well as HEV demand high-capacity rechargeable batteries, such that the sizes of the batteries increase.

As such, the prismatic rechargeable batteries become thicker and heat dissipation efficiencies are different at the inside and the outside of cells, such that it becomes difficult to secure safety in overcharging.

The above information disclosed in this Background section is only for enhancement of understanding of the background of the invention and therefore it may contain information that does not form the prior art that is already known in this country to a person of ordinary skill in the art.

A battery comprising an overcharging protection circuit of the state of the art is disclosed in US 6143440.

### SUMMARY

An exemplary embodiment of the present invention relates to a rechargeable battery which may secure safety in overcharging by short-circuiting electrode terminals at an outside and maintaining the short circuit state.

Accordingly, a rechargeable battery is provided comprising an electrode assembly including a first electrode, a second electrode, and a separator interposed between both electrodes, a case providing an internal space for accommodating the electrode assembly, a cap plate forming one side of the case, a first electrode terminal connected to the first electrode, and a second electrode terminal connected to the second electrode. Furthermore, an overcharge protection circuit is provided adapted for short-circuiting the electrode terminals when a pressure in the internal space of the case extends a predetermined value. The overcharge protection circuit includes an extendable member fixed on an outer surface of the cap plate and is in communication with the internal space of the case. The extendable member is expandable such that the extendable member extends at the predetermined pressure to an expanded state thereby closing the overcharge protection circuit so as to allow short-circuiting the electrode terminals.

The cap plate is a part of the overcharge protection circuit and/or includes a through hole and the extendable member is in communication with the internal space of the case via the through hole.

The cap plate may be connected to the first electrode.

The rechargeable battery is preferably a prismatic rechargeable battery.

The extendable member may comprise a bellows member. It may alternatively or additionally be made of a ductile but none-elastic material so as to remain in the expanded state even if the pressure inside the case drops again beneath the predetermined pressure after expansion.

A first conductive element is preferably connected to the second electrode terminal and is provided at an outside of the case such that upon extension of the extendable member, a short-circuit is established by contacting the first conductive element.

The extendable member is preferably formed of a conductive material being electrically connected to the first electrode terminal via the conductive cap plate. At least one plate spring is preferably provided at the upper side of the extendable member for providing a restoring force to keep the extendable member spaced apart from the first conductive element prior to a state in which the predetermined pressure is reached. The extendable member and the first conductive element may be adapted to melt and stick together after establishment of the short-circuit to maintain a short-circuit connection even after the battery has returned to a pressure value below the predetermined value.

The rechargeable battery may further comprise a second conductive element being electrically connected to the first electrode terminal, the second conductive element being provided spaced apart from the extendable member and spaced apart from the first conductive element in a state of the battery having a pressure below the predetermined value such that upon expansion of the extendable member, the first conductive element and the second conductive element are forced together so as to allow short-circuiting the electrode terminals. Preferably, the short-circuit is provided by a direct connection of the first conductive element and the second conductive element.

In one embodiment, the short-circuit is provided by a connection of the first conductive element and the second conductive element via a conductive plate mounted to the extendable member.

The first conductive element and the second conductive element are preferably adapted to melt and stick together after establishment of the short-circuit to maintain a short-circuit connection even after the battery has returned to a pressure value below the predetermined value.

The first conductive element, the second conductive element and the conductive plate may be adapted to melt and stick together after establishment of the short-circuit to maintain a short-circuit connection even after the battery has returned to a pressure value below the predetermined value.

Accordingly, a use of a rechargeable battery of the invention in a hybrid electric vehicle forms a part of the invention.

The battery is designed with an extendable member to form a short-circuit upon a pressure increase inside the battery. This value of the short-circuit pressure may be between 300-700% of the normal operation pressure inside the battery. For instance, the normal operation pressure may be 1 atm. Thus, the short-circuit pressure would be in the range of 3-7 atm.

### BRIEF DESCRIPTION OF THE DRAWINGS

FIG. 1 is a perspective view of a rechargeable battery according to a first embodiment of the present invention.
FIG. 2 is a cross-sectional view taken along the line II-II of FIG. 1.
FIG. 3 is a cross-sectional view showing a short circuit state of the electrode terminals when the internal pressure of the rechargeable battery increases.
FIG. 4 is a cross-sectional view showing a rechargeable battery according to a second embodiment of the present invention.
FIG. 5 is a cross-sectional view showing a rechargeable battery according to a third embodiment of the present invention.
FIG. 6 is a cross-sectional view of a rechargeable battery according to a fourth embodiment of the present invention.
FIG. 7 is a graph showing decrease of voltage and temperature due to a short circuit at the outside.

### DETAILED DESCRIPTION

The present invention will be described more fully hereinafter with reference to the accompanying drawings, in which exemplary embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

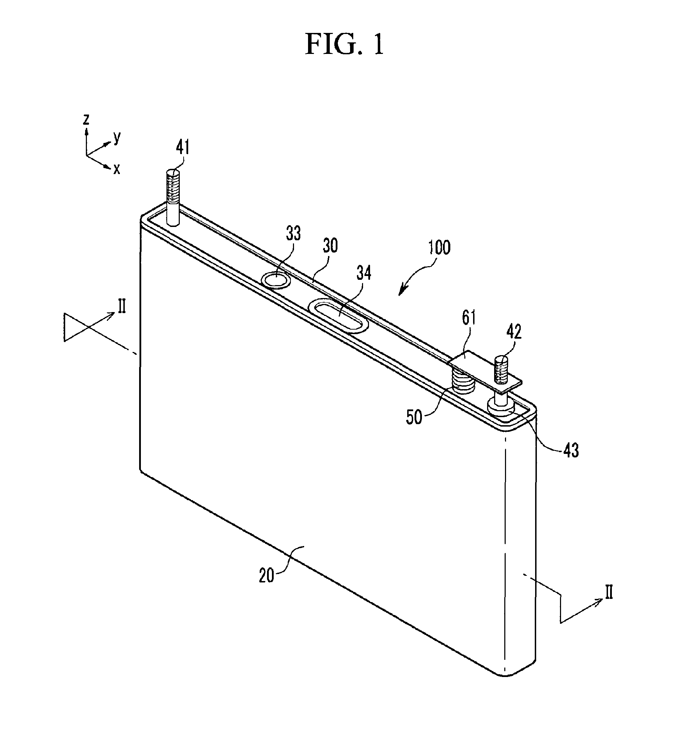

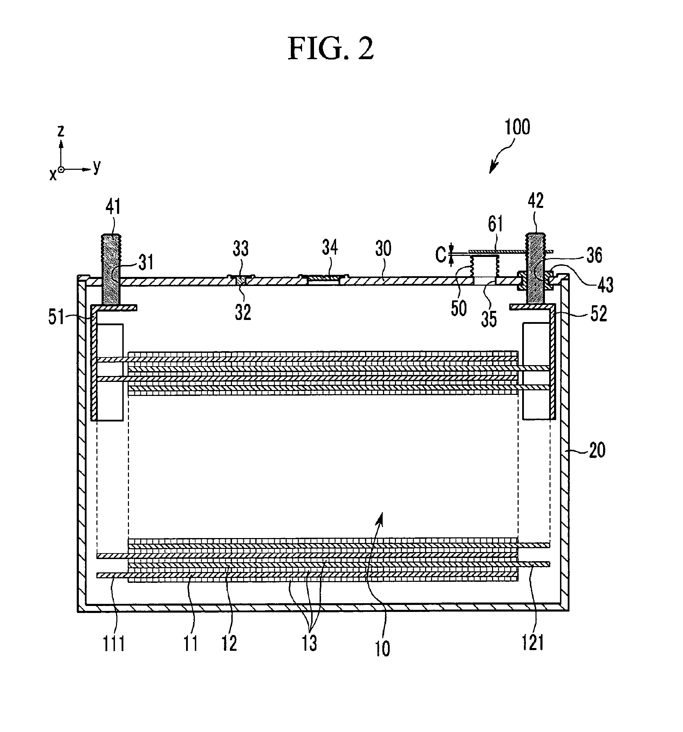

FIG. 1 is a perspective view of a rechargeable battery according to a first embodiment of the present invention, and FIG. 2 is a cross-sectional view taken along the line II-II of FIG. 1.

Referring to FIGS. 1 and 2, the rechargeable battery 100 includes a case 20 in which an electrode assembly 10 is enclosed, a cap plate 30 which closes up an opening formed at a side of the case 20, a first electrode terminal 41 and a second electrode terminal 42 fitted in terminal holes 31 and 36 of the cap plate 30, and lead members 51 and 52 connecting the first and second electrode terminals 41 and 42, respectively, to the electrode assembly 10.

The electrode assembly 10 includes a separator 13 as an insulator, and a positive electrode 11 and a negative electrode 12 each of which is located at either side of the separator 13. The positive electrode 11, the negative electrode 12 and the separator 13 are rolled up together to form a shape of jelly roll.

The positive electrode 11 and the negative electrode 12 are formed as current collectors of thin plated metallic foils, and each has a coated region and uncoated regions 111 and 121 which are partitioned by whether to coat active material. That is, the coated region is an area coated with the active material, and the uncoated regions 111 and 121 are areas that are not coated with the active material.

Each of the uncoated regions 111 and 121 are located at the longitudinal ends of the positive electrode 11 and the negative electrode 12, while being opposed to each other. The uncoated regions 111 and 121 are connected to the lead members 51 and 52, respectively, and the lead members 51 and 52 are then connected to the first and second electrode terminals 41 and 42, respectively.

The case 20 forms an external appearance of the rechargeable battery 100, and is formed by a conductive metal such as aluminum, aluminum alloy or nickel-plated steel. The case 20 provides a space in which the electrode assembly 10 is enclosed, and may be formed as a prismatic case, for instances, in a shape of hexahedron. The prismatic case 20 has a wider heat dissipating area and is superior to a cylindrical case in heat dissipation efficiency.

The cap plate 30 is formed with a thin plate, and is fitted into the opening formed at a side of the case 20, thereby closing up the opening. The cap plate 30 has an electrolyte injection hole 32 for injecting the electrolyte into the closed inside of the case 20. The electrolyte injection hole 32 is sealed up with a sealing plug 33 after injecting the electrolyte.

Further, in order to avoid explosion of the rechargeable battery 100 due to an increase of internal pressure, the cap plate 30 has a vent portion 34 that would be torn out when the internal pressure reaches a predetermined value, thereby allowing internal gas to be discharged.

Meanwhile, in order to secure safety when overcharged, the rechargeable battery 100 includes a configuration that short-circuits the first and the second electrode terminals 41 and 42 at an outside of the case 20. The rechargeable battery 100 maintains firmly the short circuit state of the first and the second electrode terminals 41 and 42, thereby preventing the short circuit state from returning to a release state.

For instances, the positive electrode 11 of the electrode assembly 10 is connected to the first electrode terminal 41 via the lead member 51, and the negative electrode 12 is connected to the second electrode terminal 42 via the lead member 52.

The first electrode terminal 41 is inserted into the terminal hole 31 of the cap plate 30, thereby being conductively connected to the cap plate 30. The first electrode terminal 41 may be welded to the cap plate 30 while being inserted into the terminal hole 31. Thus, the cap plate 30 and the first electrode terminal 41 are charged with positive. And, the case 20 may be conductively connected to the cap plate 30.

The second electrode terminal 42 is inserted into the terminal hole 36 with interposing an insulator 43, such that the second electrode terminal 42 may be kept electrically insulated from the cap plate 30. Hence, the second electrode terminal 42 is charged with negative, and is kept electrically insulated from the first electrode terminal 41 and the cap plate 30.

The rechargeable battery 100 includes an extendable member 50 which is configured to short-circuit a portion that is conductively connected to the first electrode terminal 41 and a portion that is conductively connected to the second electrode terminal 42 when the internal pressure reaches a certain value. In a preferred embodiment, the extendable member 50 comprises or consists of a bellows member.

The rechargeable battery 100 includes further a short bar 61 which forms a short circuit configuration with the extendable member 50. That is, the extendable member 50 is connected to the first electrode terminal 41 via the cap plate 30, and the short bar 61 is directly connected to the second electrode terminal 42.

The cap plate 30 has a through hole 35 at a portion adjacent to the second electrode terminal 42. The extendable member 50 is fixated on the cap plate 30 to cover the through hole 35. Accordingly, the internal pressure of the rechargeable battery 100 may work on the extendable member 50 through the through hole 35 such that the extendable member 50 extends from a contracted or normal operation state.

While the rechargeable battery 100 is operated normally and thus the internal pressure remains within a normal range, the extendable member 50 remains at a contraction state (see FIG. 2 and gap C). The extendable member 50 may be extended to contact the short bar 61 resulting in short-circuiting when the internal pressure goes over a predetermined value.

The extendable member 50 may be made from a conductive material such as aluminum or metallic material. Further, the extendable member 50 may be welded to the cap plate 30 to thereby form a conductive structure with the cap plate 30. Considering weldability, the extendable member 50 may be made from the same material as the cap plate 30.

Since the extendable member 50 is conductively connected to the cap plate 30, the extendable member 50 is substantially connected to the positive electrode 11 of the electrode assembly 10 via the lead member 51 of the first electrode terminal 41 and the uncoated region 111.

In this embodiment, the configuration that the cap plate 30 and the first electrode terminal 41 are connected to the positive electrode 11 and the second electrode terminal 42 is electrically insulated from the cap plate 30 and connected to the negative electrode 12, is illustrated. However, an oppositely connected configuration is also possible and is within the range of the present invention.

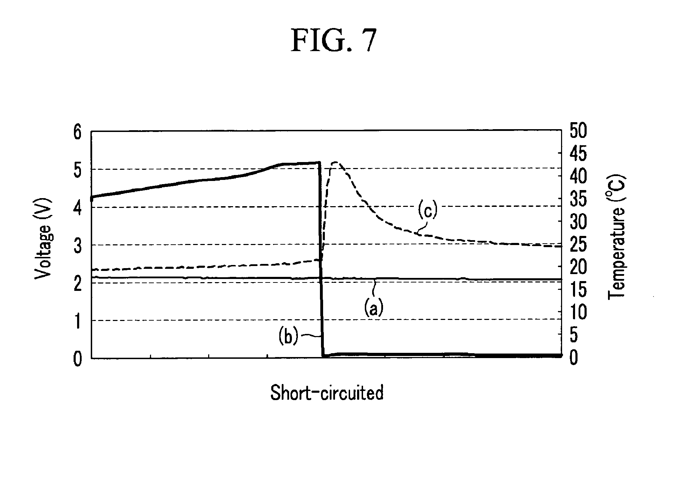

As illustrated in the first embodiment, the rechargeable battery 100 in which the cap plate 30 and the case 20 are connected to the positive electrode 11 may have a better heat dissipation efficiency when compared to a rechargeable battery (not shown) in which the cap plate 30 and the case 20 are connected to the negative electrode 12. Referring to FIG. 7, temperature changes after short-circuiting at the side of the negative electrode 12 are not exhibited to be much significant, but temperature changes after short-circuiting at the side of the positive electrode 11 are exhibited to be large.

One end of the short bar 61 is fixed at the second electrode terminal 42 and the other end of the short bar 61 is extended to face the end of the extendable member 50 in an extending direction of the extendable member 50, e.g. in Fig. 2 from the top. Accordingly, the short bar 61 may contact the extendable member 50 or be separated from the extendable member 50 depending upon the expansion or contraction of the extendable member 50.

For example, the short bar 61 is coupled with screws and electrically connected to the second electrode terminal 42. Further, the short bar 61 may be welded to the second electrode terminal 42, or screw coupling and welding are performed at the same time.

Accordingly, the positive electrode 11 of the electrode assembly 10 is connected to the extendable member 50 via the lead member 51, the first electrode terminal 41 and the cap plate 30, and the negative electrode 12 is connected to the short bar 61 via the lead member 52 and the second electrode terminal 42.

While the internal pressure of the rechargeable battery 100 remains within the normal range, the extendable member 50 is separated from the short bar 61 having a gap C therebetween.

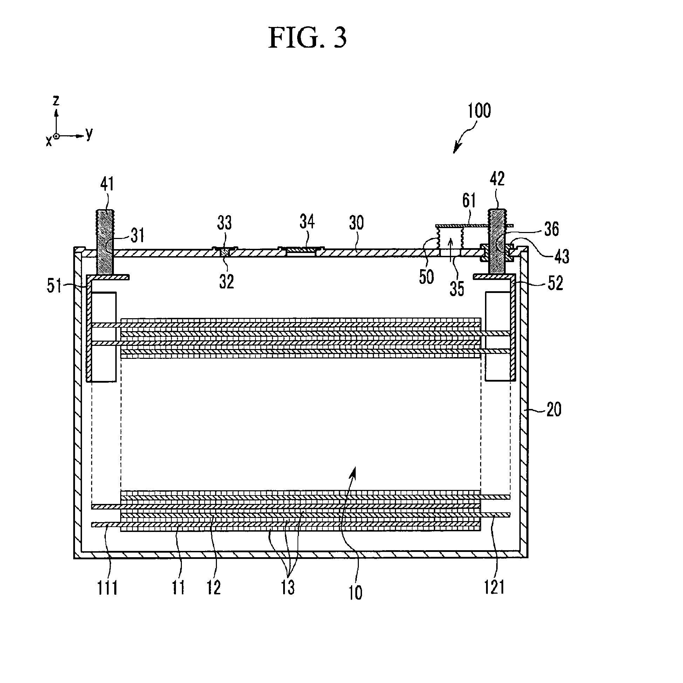

FIG. 3 is a cross-sectional view showing a short circuit state of the electrode terminals when the internal pressure of the rechargeable battery increases. Referring to FIG. 3, the internal pressure of the rechargeable battery 100 exceeds the normal range, such that the extendable member 50 is extended to thereby be short-circuited with the short bar 61. Accordingly, the rechargeable battery 100 may be released from overcharging.

The extendable member 50 and the short bar 61 are short-circuited and melted to be stuck to each other, such that the rechargeable battery 100 maintains the short circuit state. That is, the rechargeable battery 100 does not return to the overcharged state. The solution as described in conjunction with Figs. 2 and 3 provide a simple and easy to manufacture structure for providing a short circuiting element in a battery.

FIG. 7 is a graph showing decrease of voltage and temperature due to a short circuit at the outside. Referring to FIG. 7, a result of a short circuit experiment is exhibited. In the experiment, a lead storage battery was overcharged at 36A, and a positive electrode and a negative electrode were short-circuited with each other using a member of 0.05mΩ before the vent was operated.

Referring to the graph of FIG. 7, the voltage (b) of the lead storage battery rapidly dropped to 0 V, and the temperature (c) at the side of the positive electrode increased rapidly and then decreased rapidly again, when the short circuit occurred. The temperature (a) at the side of the negative electrode remains steadily.

In conclusion, it was confirmed from the above experiment that the exterior short-circuit configuration like the first embodiment could secure the safety of the rechargeable battery 100 when overcharged.

Hereinafter, various other embodiments of the present invention will be described. Descriptions about the same or similar elements as the first embodiment would be omitted and elements different from each other will be described.

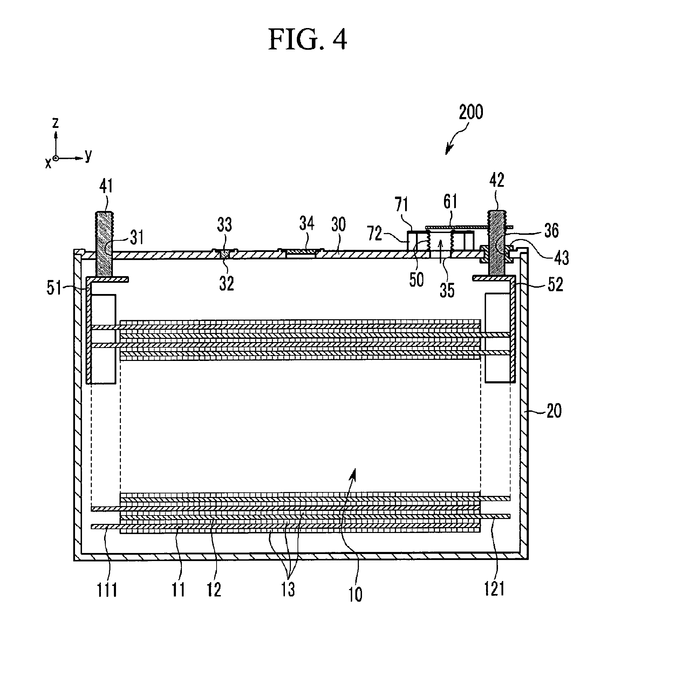

FIG. 4 is a cross-sectional view showing a rechargeable battery according to a second embodiment of the present invention. Referring to FIG. 4, the rechargeable battery 200 of this embodiment includes further an element for providing a compressive force, preferably realized by a a plate spring 71, which is fixated on the cap plate 30 and supports the extendable member 50 with a free end.

For instances, the element for providing a compressive force 71 is provided to the upper side of the extendable member 50 that is cylindrically shaped, and may support downward the extendable member 50. In the second embodiment, a pair of elements for providing a compressive force 71, for example a pair of plate springs 71 is provided at both diametrically opposing sides of the upper side of the extendable member 50, such that the upper side of the extendable member 50 is balanced by the plate springs 71.

Accordingly, the plate spring 71 may be fixated to the cap plate 30 with interposing a support member 72. That is, the support member 72 is fixed on the cap plate 30, and then the plate spring 71 is fixed on the support member 72 by one end. Further, the plate spring 71 supports the upper side of the extendable member 50 by the other end. At this time, the heights of the support member 72 and the plate spring 71 are same as the height of the extendable member 50 when contracted.

The rechargeable battery 200 of the second embodiment may prevent the extendable member 50 from being extended to be short-circuited with the short bar 61 due to a shock or a vibration, when the internal pressure remains within a normal range.

The plate spring 71 has an elastic force as much as to maintain the extendable member 50 in the contracted state while the internal pressure of the rechargeable battery 200 is within the normal range, and to allow the extendable member 50 to extend and leave out of the plate spring 71 when the internal pressure exceeds the normal range. Hence, the plate spring 71 may not disturb the extension of the extendable member 50 when the internal pressure of the rechargeable battery 200 increases, and may prevent the extendable member 50 from miscontacting with the short bar 61 when the internal pressure is within the normal range. In other words, the elastic force of the element 71 to provide a compressive force on the extendable member 50 is designed to be larger than forces occurring due to shock or vibration but smaller than forces arising from an internal pressure increase out of a normal operation pressure range inside the battery.

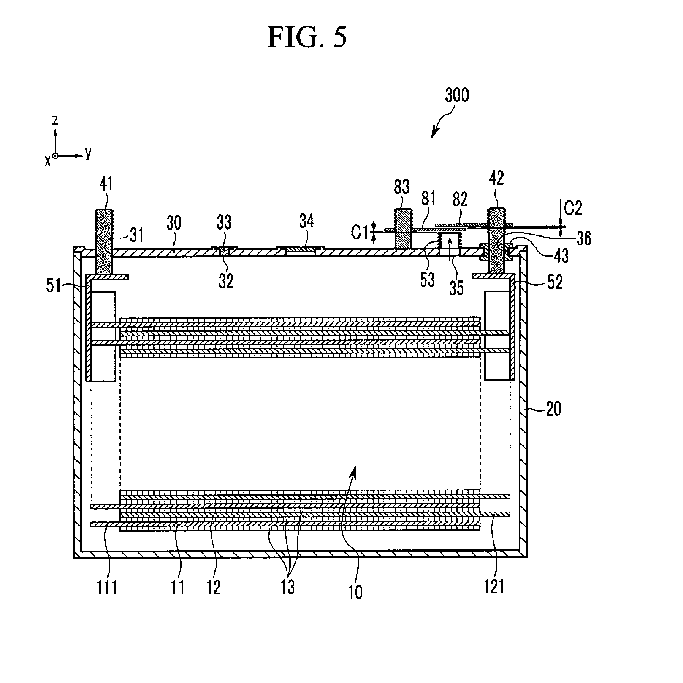

FIG. 5 is a cross-sectional view showing a rechargeable battery according to a third embodiment of the present invention. Referring to FIG. 5, the rechargeable battery 300 of this embodiment includes a extendable member 53, a first short bar 81 and a second short bar 82 such that a portion which is conductively connected to the first electrode terminal 41 and a portion which is conductively connected to the second electrode terminal 42 are short-circuited with each other when the internal pressure increases.

In the rechargeable battery 100 of the first embodiment, the extendable member 50 is made from a conductive material to thereby be short-circuited directly with the short bar 61. Instead, in the rechargeable battery 300 of the third embodiment, the first short bar 81 is conductively connected to the first electrode terminal 41 and the cap plate 30, and the second short bar 82 is conductively connected to the second electrode terminal 42, such that the first short bar 81 and the second short bar 82 are configured to be short-circuited directly with each other by the extendable member 53.

For this operation, the first short bar 81 is fixated on an assistance electrode 83 and faces the extendable member 53 while having a first gap C1 therebetween on an extension line of the extendable member 53 in a direction of extension. For example, the assistance electrode 83 is conductively connected to the cap plate 30 and the first short bar 81 is screw-coupled to the assistance electrode 83. The first short bar 81 may be welded to the assistance electrode 83 or may be screw-coupled and welded at the same time (not shown).

The second short bar 82 is fixated on the second electrode terminal 42 and faces the first short bar 81 while having a second gap C2 therebetween on the extension line of the extendable member 53 in the direction of extension. That is, the extendable member 53, the first short bar 81 and the second short bar 82 are arranged on the extension line of the extendable member 53 while having the first gap C1 and the second gap C2 therebetween.

Accordingly, while the internal pressure of the rechargeable battery 300 remains within the normal range, the extendable member 53, the first short bar 81 and the second short bar 82 are kept insulated from one another by maintaining the first gap C1 and the second gap C2. However, when the internal pressure exceeds the normal range, the extendable member 53 is extended to contact closely with the first short bar 81, and is extended further to thereby raise the first short bar 81 to short-circuit the first short bar 81 with the second short bar 82.

In the rechargeable batteries 100 and 200 of the first and second embodiments, the extendable member 50 is made from a conductive material since the extendable member 50 is conducted to thereby form a short circuit configuration. However, in the rechargeable battery 300 of the third embodiment, the extendable member 53 may be made from an insulation material because the extendable member 53 does not need to be electrically coupled with the first short bar 81 or the second short bar 82.

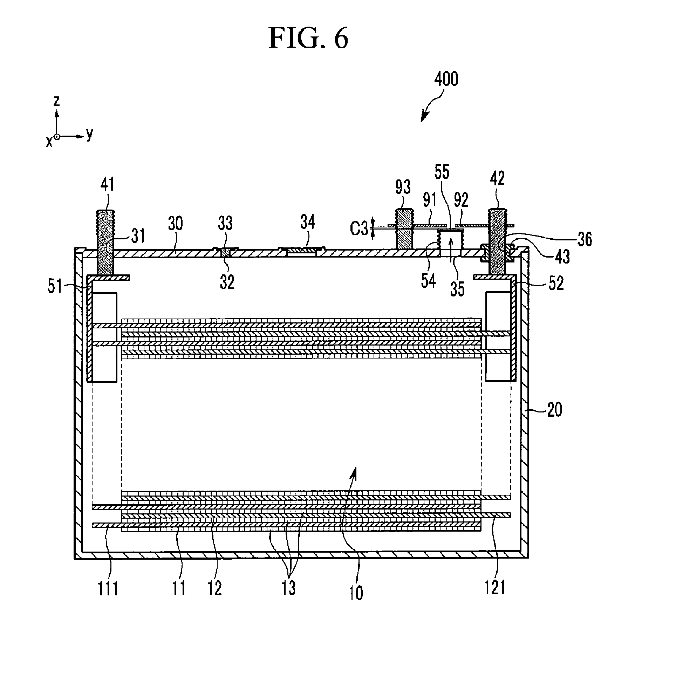

FIG. 6 is a cross-sectional view of a rechargeable battery according to a fourth embodiment. Referring to FIG. 6, the rechargeable battery 400 of this embodiment includes a extendable member 54, a conduction plate 55, a first short bar 91 and a second short bar 92 such that a portion which is conductively connected to the first electrode terminal 41 and a portion which is conductively connected to the second electrode terminal 42 are short-circuited with each other when an internal pressure reaches a certain value.

The rechargeable battery 300 of the third embodiment has a configuration including the first short bar 81 and the second short bar 82 which are short-circuited as the extendable 53 is contracted and extended. Instead, the rechargeable battery 400 of the fourth embodiment has a configuration that the first short bar 91 and the short bar 92 are short-circuited through a conduction structure of the conduction plate 55 which is located on an upper side of the extendable member 54 as the extendable 54 is contracted and extended.

For this operation, the first short bar 91 and the second short bar 92 are located at the same height from the conduction plate 55 of the extendable member 54. The first short bar 91 is fixated on an assistance electrode 93 and partly faces the upper side of the extendable member 54 having a third gap C3 therebetween on an extension line of the extendable member 54 in a direction of extension.

The second short bar 92 is fixated on the second electrode terminal 42 and partly faces the upper side of the extendable member 54 having a third gap C3 therebetween on the extension line of the extendable member 54 in the direction of extension. That is, the gap between the first short bar 91 and the extendable member 54 and the gap between the second short bar 92 and the extendable member 54 are the same as the third gap C3. The first short bar 91 and the second short bar 92 face the upper side of the extendable member 54 at a portion different from each other.

Accordingly, while the internal pressure of the rechargeable battery 400 remains within a normal range, the extendable member 54 is kept electrically insulated from the first short bar 91 and the second short bar 92 while being spaced apart by the third gap C3. However, when the internal pressure of the rechargeable battery 400 exceeds the normal range, the extendable member 54 is extended to thereby short-circuit the conduction plate 55 provided on the upper side of the extendable 54 with the first short bar 91 and the second short bar 92.

In the rechargeable battery 300 of the third embodiment, the extendable member 53 short-circuits the first short bar 81 with the second short bar 82, such that the first short bar 81 and the second short bar 82 are directly short-circuited. Instead, in the rechargeable battery 400 of the fourth embodiment, the extendable member 54 raises the conduction plate 55 to thereby short-circuit the first short bar 91 with the second short bar 92 via the conduction plate 55. Thus, two contact points are necessary to establish the short circuit in the fourth embodiment thereby further avoiding erroneous short-circuit contacts due to external impact on the battery.

Accordingly, in the rechargeable batteries 300 and 400 of the third and fourth embodiments, the extendable member 53 and 54 may be formed with various materials other than a conductive material. The extendable member may for instance be formed of a ductile but non-elastic material in order to maintain the short-circuit state after its establishment.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A rechargeable battery (100) comprising:
an electrode assembly (10) including a first electrode (11), a second electrode (12), and a separator (13) interposed between both electrodes (11, 12);
a case (20) providing an internal space for accommodating the electrode assembly (10);
a cap plate (30) forming one side of the case (20), a first electrode terminal (41) connected to the first electrode (11), and a second electrode terminal (42) connected to the second electrode (12); the cap plate comprising an electrolyte injection hole (32) for injecting an electrolyte into the case (20) and a vent portion (34) allowing internal gas to be discharged when an internal pressure inside the case exceeds a predetermined value; and
an overcharge protection circuit adapted for short-circuiting the electrode terminals (41, 42) when a pressure in the internal space of the case (20)
exceeds a predetermined value, the overcharge protection circuit including an extendable member (50, 53, 54) fixed on an outer surface of the cap plate (30) and being in communication with the internal space of the case (20), wherein the cap plate is a part of the overcharge protection circuit,,
**characterized in that**
the extendable member (50) being expandable such that the extendable member (50, 53, 54) extends at the predetermined pressure to an expanded state thereby closing the overcharge protection circuit so as to allow short-circuiting the electrode terminals (41, 42).

2. The rechargeable battery of claim 1, wherein the cap plate (30)
includes a through hole (35) and the extendable member (50, 53, 54) is in communication with the internal space of the case (20) via the through hole (35).

3. The rechargeable battery of claim 2, wherein the cap plate (30) is connected to the first electrode (11).

4. The rechargeable battery of any of the preceding claims, wherein the rechargeable battery (100) is a prismatic rechargeable battery.

5. The rechargeable battery of any of the preceding claims, wherein the extendable member (50)
comprises a bellows member; and/or
is made of a ductile but none-elastic material so as to remain in the expanded state even if the pressure inside the case (20) drops again beneath the predetermined pressure after expansion.

6. The rechargeable battery of any of the preceding claims, wherein a first conductive element (61, 82, 92) being connected to the second electrode terminal (42) is provided at an outside of the case such that upon extension of the extendable member (50, 53, 54) the short-circuit is established by contacting the first conductive element (61, 82, 92).

7. The rechargeable battery of any of the preceding claims, wherein the extendable member (50) is formed of a conductive material being electrically connected to the first electrode terminal (41) via the conductive cap plate (30).

8. The rechargeable battery of claims 6 or 7, wherein at least one plate spring (71) is provided at the upper side of the extendable member (50) for providing a restoring force to keep the extendable member (50, 53, 54) spaced apart from the first conductive element (61, 82, 92) prior to a state in which the predetermined pressure is reached.

9. The rechargeable battery of one of the claims 6 to 8, wherein the extendable member (50) and the first conductive element (61) are adapted to melt and stick together after establishment of the short-circuit to maintain a short-circuit connection even after the battery has returned to a pressure value below the predetermined value.

10. The rechargeable battery of one of claims 6 to 8, further comprising a second conductive element (81, 91) being electrically connected to the first electrode terminal (41), the second conductive element (81, 91) being provided spaced apart from the extendable member (53, 54) and spaced apart from the first conductive element (82, 92) in a state of the battery having a pressure below the predetermined value such that upon expansion of the extendable member (53, 54), the first conductive element (82, 92) and the second conductive element (81, 91) are forced together so as to allow short-circuiting the electrode terminals (41, 42).

11. The rechargeable battery of claim 10, wherein the short-circuit is provided by a direct connection of the first conductive element (82) and the second conductive element (81).

12. The rechargeable battery of claim 10, wherein the short-circuit is provided by a connection of the first conductive element (92) and the second conductive element (91) via a conductive plate (55) mounted to the extendable member (54).

13. The rechargeable battery of claim 11, wherein the first conductive element (82) and the second conductive element (81) are adapted to melt and stick together after establishment of the short-circuit to maintain a short-circuit connection even after the battery has returned to a pressure value below the predetermined value.

14. The rechargeable battery of claim 12, wherein the first conductive element (92), the second conductive element (91) and the conductive plate (55) are adapted to melt and stick together after establishment of the short-circuit to maintain a short-circuit connection even after the battery has returned to a pressure value below the predetermined value.

15. Use of a rechargeable battery of any of claims 1 through 14 in a vehicle.

## Patentansprüche

1. Wiederaufladbare Batterie (100), umfassend:
eine Elektrodenanordnung (10) mit einer ersten Elektrode (11), einer zweiten Elektrode (12) und einem zwischen beide Elektroden (11, 12) angeordnetem Separator (13);
ein Gehäuse (20) zum Bereitstellen eines Innenraums für die Aufnahme der Elektrodenanordnung (10);
eine Abdeckplatte (30) zur Ausbildung einer Seite des Gehäuses (20), wobei eine erste Elektrodenklemme (41) mit der ersten Elektrode (11) verbunden ist und eine zweite Elektrodenklemme (42) mit der zweiten Elektrode (12) verbunden ist; wobei die Abdeckplatte eine Elektrolyteinspritzöffnung (32) zum Einspritzen eines Elektrolyts in das Gehäuse (20) und einen Entlüftungsabschnitt (34) umfasst, der die Entladung eines im Inneren vorliegenden Gases ermöglicht, wenn ein Innendruck innerhalb des Gehäuses einen vorbestimmten Wert übersteigt; und
eine Überladungsschutzschaltung, die ausgebildet ist zum Kurzschließen der Elektrodenklemmen (41, 42), wenn ein Druck in dem Innenraum des Gehäuses (20) einen vorbestimmten Wert übersteigt, wobei die Überladungsschutzschaltung ein ausdehnbares Element (50, 53, 54) umfasst, das an einer Außenfläche der Abdeckplatte (30) befestigt ist und mit dem Innenraum des Gehäuses (20) in Verbindung steht, wobei die Abdeckplatte ein Teil der Überladungsschutzschaltung bildet,
**dadurch gekennzeichnet, dass**
das ausdehnbare Element (50) derart ausdehnbar ist, dass sich das ausdehnbare Element (50, 53, 54) bei dem vorbestimmten Druck in einen ausgedehnten Zustand erweitert und somit die Überladungsschutzschaltung schließt, um ein Kurzschließen der Elektrodenklemmen (41, 42) zu ermöglichen.

2. Wiederaufladbare Batterie nach Anspruch 1, wobei die Abdeckplatte (30) eine Durchgangsöffnung (35) aufweist und das erweiterungsfähige Element (50, 53, 54) durch die Durchgangsöffnung (35) mit dem Innenraum des Gehäuses (20) in Verbindung steht.

3. Wiederaufladbare Batterie nach Anspruch 2, wobei die Abdeckplatte (30) mit der ersten Elektrode (11) verbunden ist.

4. Wiederaufladbare Batterie nach einem der vorstehenden Ansprüche, wobei die wiederaufladbare Batterie (100) eine prismatische wiederaufladbare Batterie ist.

5. Wiederaufladbare Batterie nach einem der vorstehenden Ansprüche, wobei das ausdehnbare Element (50)
ein Balgelement umfasst; und/oder
aus einem verformbaren, jedoch unelastischen Material besteht, um auch dann im ausgedehnten Zustand zu verbleiben, wenn nach der Ausdehnung der Druck in dem Gehäuse (20) wieder unter den vorbestimmten Druck fällt.

6. Wiederaufladbare Batterie nach einem der vorstehenden Ansprüche, wobei ein erstes mit der zweiten Elektrodenklemme (42) verbundenes leitfähiges Element (61, 82, 92) an einer Außenseite des Gehäuses derart vorgesehen ist, dass nach Ausdehnung des ausdehnbaren Elements (50, 53, 54) der Kurzschluss durch Kontaktieren des ersten leitfähigen Elements (61, 82, 92) hergestellt wird.

7. Wiederaufladbare Batterie nach einem der vorstehenden Ansprüche, wobei das ausdehnbare Element (50) aus einem leitfähigen Material gebildet ist, das elektrisch mit der ersten Elektrodenklemme (41) über die leitfähige Abdeckplatte (30) verbunden ist.

8. Wiederaufladbare Batterie nach Anspruch 6 oder 7, wobei mindestens eine Blattfeder (71) an der Oberseite des ausdehnbaren Elements (50) zur Bereitstellung einer Rückstellkraft vorgesehen ist, um das ausdehnbare Element (50, 53, 54) von dem ersten leitfähigen Element (61, 82, 92) vor einem Zustand, in dem der vorbestimmte Druck erreicht wird, beabstandet zu halten.

9. Wiederaufladbare Batterie nach einem der Ansprüche 6 bis 8, wobei das ausdehnbare Element (50) und das erste leitfähige Element (61) so ausgeführt sind, dass sie nach Herstellung des Kurzschlusses schmelzen und aneinanderkleben, um auch dann eine Kurzschlussverbindung aufrechtzuerhalten, wenn die Batterie wieder einen Druckwert unter dem vorbestimmten Wert angenommen hat.

10. Wiederaufladbare Batterie nach einem der Ansprüche 6 bis 8, ferner umfassend ein zweites mit der ersten Elektrodenklemme (41) elektrisch verbundenes leitfähiges Element (81, 91), wobei in einem Zustand, in dem der Batteriedruck unter dem vorbestimmten Wert liegt, das zweite leitfähige Element (81, 91) beabstandet von dem ausdehnbaren Element (53, 54) sowie beabstandet von dem ersten leitfähigen Element (82, 92) vorgesehen ist, derart, dass nach Ausdehnung des ausdehnbaren Elements (53, 54) das erste leitfähige Element (82, 92) und das zweite leitfähige Element (81, 91) zusammengepresst werden, um so ein Kurzschließen der Elektrodenklemmen (41, 42) zu ermöglichen.

11. Wiederaufladbare Batterie nach Anspruch 10, wobei der Kurzschluss über eine direkte Verbindung des ersten leitfähigen Elements (82) und des zweiten leitfähigen Elements (81) erhalten wird.

12. Wiederaufladbare Batterie nach Anspruch 10, wobei der Kurzschluss über eine Verbindung des ersten leitfähigen Elements (92) und des zweiten leitfähigen Elements (91) über eine an dem ausdehnbaren Element (54) angebrachte leitfähige Platte (55) erhalten wird.

13. Wiederaufladbare Batterie nach Anspruch 11, wobei das erste leitfähige Element (82) und das zweite leitfähige Element (81) so ausgeführt sind, dass sie nach Herstellung des Kurzschlusses schmelzen und aneinanderkleben, um auch dann eine Kurzschlussverbindung aufrechtzuerhalten, wenn die Batterie wieder einen Druckwert unter dem vorbestimmten Wert angenommen hat.

14. Wiederaufladbare Batterie nach Anspruch 12, wobei das erste leitfähige Element (92) und das zweite leitfähige Element (91) sowie die leitfähige Platte (55) so ausgeführt sind, dass sie nach Herstellung des Kurzschlusses schmelzen und aneinanderkleben, um auch dann eine Kurzschlussverbindung aufrechtzuerhalten, wenn die Batterie wieder einen Druckwert unter dem vorbestimmten Wert angenommen hat.

15. Verwendung einer wiederaufladbaren Batterie nach einem der Ansprüche 1 bis 14 in einem Fahrzeug.

## Revendications

1. Batterie rechargeable (100) comprenant :
un ensemble d'électrodes (10) comportant une première électrode (11), une deuxième électrode (12), et un séparateur (13) interposé entre les deux électrodes (11, 12) ;
un boîtier (20) fournissant un espace interne permettant de recevoir l'ensemble d'électrodes (10) ;
une plaque de couvercle (30) formant un côté du boîtier (20), une première borne d'électrode (41) liée à la première électrode (11), et une deuxième borne d'électrode (42) liée à la deuxième électrode (12) ; la plaque de couvercle comprenant un trou d'injection d'électrolyte (32) pour l'injection d'un électrolyte dans le boîtier (20) et une partie d'aération (34) permettant au gaz interne d'être déchargé lorsqu'une pression interne à l'intérieur du boîtier dépasse une valeur prédéterminée ; et
un circuit de protection contre les surcharges conçu pour court-circuiter les bornes d'électrodes (41, 42) lorsqu'une pression dans l'espace interne du boîtier (20) dépasse une valeur prédéterminée, le circuit de protection contre les surcharges comportant un élément extensible (50, 53, 54) fixé sur une surface extérieure de la plaque de couvercle (30) et étant en communication avec l'espace interne du boîtier (20), où la plaque de couvercle fait partie du circuit de protection contre les surcharges, **caractérisée en ce que**
l'élément extensible (50) est expansible de sorte que l'élément extensible (50, 53, 54) s'étende à la pression prédéterminée vers un état expansé, fermant ainsi le circuit de protection contre les surcharges de manière à permettre une mise en court-circuit des bornes d'électrodes (41,42).

2. Batterie rechargeable de la revendication 1, dans laquelle la plaque de couvercle (30)
comporte un trou traversant (35) et l'élément extensible (50, 53, 54) est en communication avec l'espace interne du boîtier (20) par l'intermédiaire du trou traversant (35).

3. Batterie rechargeable de la revendication 2, dans laquelle la plaque de couvercle (30) est liée à la première électrode (11).

4. Batterie rechargeable de l'une quelconque des revendications précédentes, dans laquelle la batterie rechargeable (100) est une batterie rechargeable prismatique.

5. Batterie rechargeable de l'une quelconque des revendications précédentes, dans laquelle l'élément extensible (50)
comprend un élément de soufflet ; et/ou
est réalisé d'un matériau ductile mais non élastique de manière à rester à l'état expansé, même si la pression à l'intérieur du boîtier (20) diminue de nouveau au-dessous de la pression prédéterminée après l'expansion.

6. Batterie rechargeable de l'une quelconque des revendications précédentes, dans laquelle un premier élément conducteur (61, 82, 92) étant lié à la deuxième borne d'électrode (42) est prévu à l'extérieur du boîtier de sorte que lors d'une extension de l'élément extensible (50, 53, 54) le court-circuit s'établisse par le contact avec l'élément conducteur (61, 82, 92).

7. Batterie rechargeable de l'une quelconque des revendications précédentes, dans laquelle l'élément extensible (50) est formé d'un matériau conducteur étant électriquement lié à la première borne d'électrode (41) par l'intermédiaire de la plaque de couvercle conductrice (30).

8. Batterie rechargeable des revendications 6 ou 7, dans laquelle au moins un ressort à lame (71) est prévu au côté supérieur de l'élément extensible (50) pour fournir une force de rappel afin de maintenir l'élément extensible (50, 53, 54) espacé du premier élément conducteur (61, 82, 92) avant un état dans lequel la pression prédéterminée est atteinte.

9. Batterie rechargeable de l'une des revendications 6 à 8, dans laquelle l'élément extensible (50) et le premier élément conducteur (61) sont adaptés pour fondre et se coller ensemble après l'établissement du court-circuit pour maintenir une liaison de court-circuit, même après le retour de la batterie à une valeur de pression inférieure à la valeur prédéterminée.

10. Batterie rechargeable de l'une des revendications 6 à 8, comprenant en outre un deuxième élément conducteur (81, 91) étant lié électriquement à la première borne d'électrode (41), le deuxième élément conducteur (81, 91) étant prévu espacé de l'élément extensible (53, 54) et espacé du premier élément conducteur (82, 92) dans un état où la batterie possède une pression inférieure à la valeur prédéterminée de sorte que lors d'une expansion de l'élément extensible (53, 54), le premier élément conducteur (82, 92) et le deuxième élément conducteur (81, 91) sont forcés ensemble de manière à permettre la mise en court-circuit des bornes d'électrodes (41, 42).

11. Batterie rechargeable de la revendication 10, dans laquelle le court-circuit est prévu par une liaison directe du premier élément conducteur (82) et du deuxième élément conducteur (81).

12. Batterie rechargeable de la revendication 10, dans laquelle le court-circuit est prévu par une liaison du premier élément conducteur (92) et du deuxième élément conducteur (91) par l'intermédiaire d'une plaque conductrice (55) montée à l'élément extensible (54).

13. Batterie rechargeable de la revendication 11, dans laquelle le premier élément conducteur (82) et le deuxième élément conducteur (81) sont adaptés pour fondre et se coller ensemble après l'établissement du court-circuit pour maintenir une liaison de court-circuit, même après le retour de la batterie à une valeur de pression inférieure à la valeur prédéterminée.

14. Batterie rechargeable de la revendication 12, dans laquelle le premier élément conducteur (92), le deuxième élément conducteur (91) et la plaque conductrice (55) sont adaptés pour fondre et se coller ensemble après l'établissement du court-circuit pour maintenir une liaison de court-circuit même après le retour de la batterie à une valeur de pression inférieure à la valeur prédéterminée.

15. Utilisation d'une batterie rechargeable de l'une des revendications 1 à 14 dans un véhicule.
